# FASCICULE DE BREVET EUROPEEN

(11) **EP 2 508 399 B1**
(45) Date de publication et mention de la délivrance du brevet: **24.08.2016**
(21) Numéro de dépôt: 12163043.8
(22) Date de dépôt: 03.04.2012
(51) Int. Cl.: B60T 8/17, B60T 8/32

(54) **Architecture de système de freinage pour aéronef**
Aufbau eines Bremssystems für ein Luftfahrzeug
Architecture of an aircraft braking system

(30) Priorité: 07.04.2011 FR 1153032
(43) Date de publication de la demande: 10.10.2012
(73) Titulaire: Messier-Bugatti-Dowty, 78140 Vélizy-Villacoublay (FR)
(72) Inventeur: Thibault, Julien, 91190 GIF-SUR-YVETTE (FR); Mudry, Stéphane, 69007 Lyon (FR); Onfroy, Dominique, 78140 VELIZY-VILLACOUBLAY (FR)
(74) Mandataire: Parzy, Benjamin Alain

(56) Documents cités:
- EP-A1- 1 681 220
- US-A1- 2008 157 590

## Description

L'invention est relative à une architecture de système de freinage pour aéronef.

### ARRIERE-PLAN TECHNOLOGIQUE DE L'INVENTION

On connaît des systèmes de freinage pour aéronef comportant :
- des freins à actionneurs électromécaniques pour appliquer sélectivement un effort de freinage sur des piles de disques respectives pour exercer un couple de freinage sur des roues respectives ;
- au moins un module de puissance adapté à envoyer aux actionneurs électromécaniques des courants de phase afin que ceux-ci exercent un effort de freinage ;
- au moins un module de commande pour commander le module de puissance en réponse à un ordre de freinage de sorte que des courants de phase appropriés soient envoyés aux actionneurs pour que ceux-ci développent l'effort de freinage désiré;
- au moins un boîtier d'alimentation, comportant des moyens de génération d'une haute tension à partir d'un bus de puissance électrique de l'aéronef et/ou d'une batterie de l'aéronef, pour fournir au module de puissance la haute puissance nécessaire à l'alimentation des actionneurs.

Un tel système de freinage pour aéronef est connu du document EP 1 681 220 A1.

En général, le module de commande et le module de puissance sont regroupés dans un contrôleur appelé EMAC. Le boîtier d'alimentation comporte en général un convertisseur (par exemple un transformateur) apte à transformer la puissance fournie par le bus de puissance de l'aéronef en une puissance de haute tension calibrée pour répondre aux appels de forte puissance générées par le module de puissance de l'EMAC.

Les cartes électroniques du module de commande de l'EMAC sont quant à elle alimentées par une source basse tension de l'aéronef. En outre, l'EMAC intègre généralement la commande d'un organe de verrouillage de l'actionneur électromécanique en position, qui sert à assurer le freinage de parc, et qui peut être alimenté en basse tension ou en haute tension pour être actionné.

Enfin, l'architecture comporte généralement un calculateur de freinage adapté à générer l'ordre de freinage (fonction AUTOBRAKE) en mettant en oeuvre une protection antiglissement. Les cartes électroniques du calculateur sont alimentées par la source basse tension de l'aéronef.

### OBJET DE L'INVENTION

L'invention vise à proposer une architecture de système de freinage simplifiée, nécessitant moins de connexions avec les systèmes électriques de l'aéronef.

### PRESENTATION DE L'INVENTION

En vue de la réalisation de ce but, on propose une architecture de système de freinage pour aéronef comportant :
- des freins à actionneurs électromécaniques pour appliquer sélectivement un effort de freinage sur des piles de disques respectives pour exercer un couple de freinage sur des roues respectives ;
- au moins un module de puissance adapté à envoyer aux actionneurs électromécaniques des courants de phase afin que ceux-ci exercent un effort de freinage ;
- au moins un module de commande pour commander le module de puissance en réponse à un ordre de freinage de sorte que des courants de phase appropriés soient envoyés aux actionneurs pour que ceux-ci développent l'effort de freinage désiré ;
- au moins un boîtier d'alimentation, comportant des moyens de génération d'une haute tension pour fournir au module de puissance la haute puissance nécessaire à l'alimentation des actionneurs.

Selon l'invention, le boîtier d'alimentation comporte en outre des moyens de génération d'une basse tension pour alimenter en basse tension au moins le module de commande.

La basse tension ainsi générée sert tant à l'alimentation des cartes électroniques du module de commande que pour l'actionnement de l'organe de verrouillage des actionneurs servant au freinage de parc si les actionneurs en sont équipés. En outre, cette basse tension pourra être utilisée pour alimenter également le ou les calculateurs de freinage si le système de freinage en est équipé. Ainsi, la connexion du système de freinage de l'invention aux sources de puissance de l'aéronef sera réduite à la connexion du boîtier d'alimentation au bus de puissance de l'aéronef ou à la batterie de celui-ci. Tous les autres équipements du système de freinage seront alimentés directement par le boîtier d'alimentation, ce qui simplifie considérablement la connexion du système de freinage aux sources de puissance de l'aéronef.

Selon un aspect particulier de l'invention, le boîtier d'alimentation est équipé d'un interrupteur de puissance commandé disposé en aval des moyens de génération de haute tension. Cet interrupteur constitue une sécurité garantissant que la haute tension ne sera délivrée aux actionneurs que si un ordre de freinage est délivré, ce qui permet de prévenir les freinages intempestifs. Il pourra par exemple être commandé selon la logique détaillée dans le document FR2857642.

Selon l'invention, le boîtier d'alimentation est équipé, en remplacement ou en complément de l'interrupteur de puissance déjà évoqué, d'un interrupteur commandé disposé en aval des moyens de génération de basse tension. Cet interrupteur permet de garantir que le module de commande ne sera alimenté, et donc que celui-ci ne sera capable de commander le module de puissance pour générer des courants de phase, que si un ordre de freinage est délivré, ce qui permet également de prévenir les freinages intempestifs.

### BREVE DESCRIPTION DES FIGURES

L'invention sera mieux comprise à la lumière de la description qui suit de modes de réalisations particuliers de l'invention, en référence aux figures des dessins annexés parmi lesquelles :
- la figure 1 est un schéma d'un système de freinage d'aéronef selon un mode particulier de réalisation ne faisant pas partie de l'invention ;
- la figure 2 est un schéma illustrant une variante du système de freinage illustré à la figure 1.

Sur ces figures, les flux de haute tension sont en traits gras, les flux de basse tension en traits fins, et les flux de signaux en traits mixtes.

### DESCRIPTION DETAILLEE DE L'INVENTION

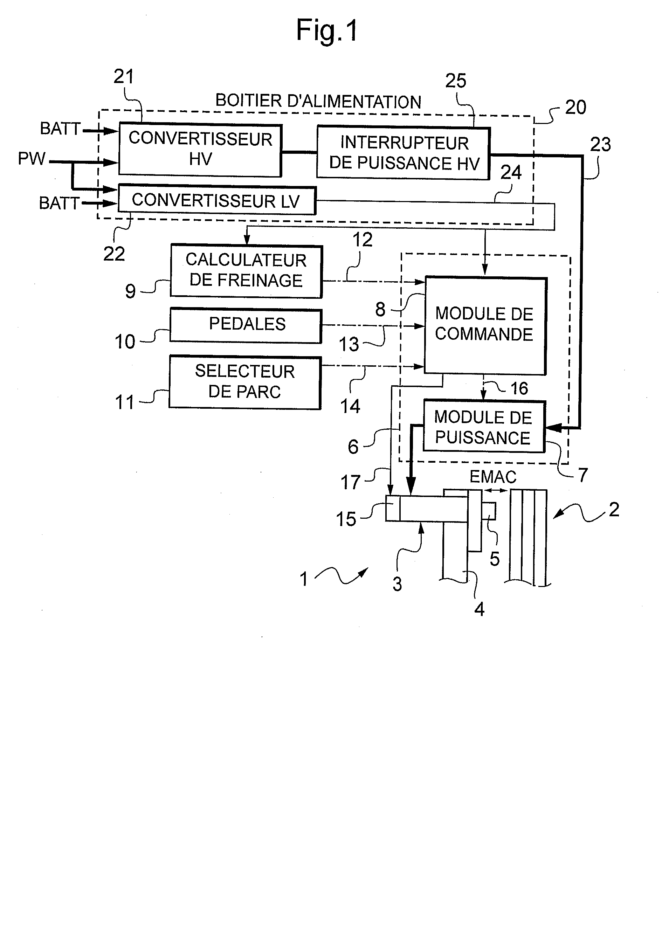

En référence à la figure 1, les freins électromécaniques 1 du système de freinage d'aéronef de l'invention comportent chacun une pile de disques 2 comportant en alternance des disques solidaires en rotation de la roue à freiner et des disques fixes en rotation. Chaque frein 1 comporte une pluralité d'actionneurs 3 (un seul est représenté ici) qui sont portés par une couronne 4 pour s'étendre en regard de la pile de disques 2. Chaque actionneur 3 comporte un poussoir 5 apte à être déplacé vers la pile de disques 2 pour presser celle-ci et ainsi générer un effort de freinage.

Le poussoir 5 est déplacé par un moteur électrique de l'actionneur via une chaîne cinématique transformant un mouvement de rotation du moteur électrique en un mouvement de translation du poussoir 5. Le moteur électrique est alimenté par un contrôleur ou EMAC 6 comportant un module de puissance 7 qui délivre au moteur de l'actionneur des courants de phase en fonction d'un ordre 16 délivré par un module de commande 8.

Les ordres délivrés par le module de commande 8 sont élaborés à partir de divers signaux venant en particulier d'un calculateur de freinage 9, d'une pédale de frein 10 ou d'un sélecteur de parc 11.

L'ensemble du système de freinage de l'aéronef est ici prévu pour fonctionner en trois modes: un mode normal, un mode d'urgence, et un mode de parc.

Dans le mode normal, le module de commande 8 génère un ordre 16 en fonction d'une consigne de freinage 12 reçue du calculateur de freinage 9.

Dans le mode d'urgence, dans lequel le calculateur de freinage est défaillant, le module de commande 8 génère un ordre 16 en fonction d'un signal de pédale 13 représentatif de l'enfoncement de la pédale de frein 10 actionnée directement par le pilote.

Dans le mode de parc, prioritaire par rapport aux autres modes, le module de commande 8 génère un ordre de freinage de parc 17 en réponse à un signal de parc 14 émis lors de l'actionnement du sélecteur de parc 11 par le pilote. Pour permettre un maintien du freinage de parc alors que l'aéronef est à l'arrêt, l'actionneur 3 est équipé d'un organe de blocage de parc, ici par exemple un frein à manque de courant 15 qui, lorsqu'il n'est pas alimenté, bloque le poussoir en position, en bloquant l'un des arbres de transmission de la chaîne cinématique entre le moteur électrique et le poussoir 5.

Il suffit dès lors de s'assurer que le frein à manque de courant 15 est alimenté, de commander le déplacement du poussoir 5 pour qu'il exerce sur la pile de disques un effort de parc, puis de couper l'alimentation du frein à manque de courant 15 pour bloquer l'actionneur en position de freinage de parc.

L'architecture comporte un boîtier d'alimentation 20 intégrant des convertisseurs 21 et 22 qui, à partir d'au moins un bus de puissance PW de l'aéronef et, le cas échéant, de la batterie de l'aéronef, élaborent des puissances (ici des courants continus) servant à l'alimentation des différents équipements de du système de freinage, respectivement une haute tension HVDC 23 et une basse tension LVDC 24.

Par convertisseur, il faut bien sûr entendre tout dispositif permettant, à partir des sources de puissance disponibles (par exemple les alternateurs entraînés par les réacteurs ou par l'unité de puissance auxiliaire de l'aéronef), de générer les deux puissances nécessaires à l'actionnement du système de freinage. De préférence, chaque convertisseur inclut un commutateur commandé permettant de passer sur la batterie de l'aéronef lorsque les sources de puissance ne sont plus disponibles.

La haute tension HVDC 23 est utilisée pour alimenter le module de puissance 7 de l'EMAC 6 afin que celui-ci puisse générer les courants de phase nécessaires pour alimenter les moteurs actionneurs de freinage. Quant à la basse tension LVDC 24, elle alimente le module de commande de l'EMAC 6, ainsi que le calculateur de freinage 9 et sert à fournir l'électricité nécessaire au fonctionnement des cartes électroniques associées. Ainsi, seul le boîtier d'alimentation 20 est connecté aux sources de puissance de l'aéronef.

Ici, un interrupteur de puissance 25 commandé est disposé en aval du convertisseur haute tension 21 pour n'autoriser l'alimentation du module de puissance de l'EMAC uniquement si un ordre de freinage a bien été émis, soit par le calculateur de freinage, soit par les pédales, soit par le sélecteur de parc.

La logique de commande de l'interrupteur de puissance 25 peut par exemple être prévue conforme à la logique détaillée dans le document FR2857642.

Cette logique place par défaut l'interrupteur 25 dans un état ouvert pour lequel le module de puissance de l'actionneur 7 n'est pas alimenté. Dans cet état, le poussoir 5 de l'actionneur 3 ne peut se déplacer en réponse à un ordre du module de commande 8. Cette logique place l'interrupteur 25 dans un état fermé uniquement en réponse à un ordre de fermeture provenant du module de commande de l'actionneur 8, confirmé par un signal de confirmation ne provenant pas du module de commande 8 et indépendant de celui-ci.

Les avantages des dispositions de l'invention sont nombreux :
- Amélioration de la disponibilité des capacités de freinage. Avec un boîtier d'alimentation conforme à l'invention, il est possible de freiner l'avion sans la présence du réseau de puissance de l'avion (tous réacteurs et unité de puissance auxiliaire éteints, et sans groupe de parc disponible) puisque le boîtier d'alimentation est apte à gérer automatiquement à partir de la batterie l'alimentation en haute et basse tensions des équipements du système de freinage.
- Simplification du système de freinage, obtenue en limitant le nombre de convertisseurs de tension dans le système de freinage et le nombre d'entrées d'alimentation des divers équipements du système de freinage. En outre, le boîtier d'alimentation peut être programmé pour provoquer simplement la réinitialisation des divers équipements par une opération de coupure et de réalimentation des cartes associées.
- Amélioration de la fiabilité du système de freinage. La fiabilité des équipements composant le système de freinage est notablement augmentée, car le boîtier d'alimentation peut être programmé pour provoquer l'extinction des divers équipements du système de freinage pendant les phases de vol, avec les atterrisseurs rentrés, et n'autoriser leur alimentation qu'au moment de la sortie des atterrisseurs.
- Optimisation de la consommation sur batterie. En cas de passage sur la batterie de l'aéronef, la basse tension peut n'être autorisée qu'en cas de demande de freinage, afin de limiter la consommation sur la batterie. Une recopie de l'état batterie peut être envoyée par le boîtier d'alimentation aux calculateurs et modules de contrôle des actionneurs, afin d'adoucir les lois de contrôle (une performance de freinage dégradée sur batterie est généralement autorisée par l'avionneur)
- Amélioration de la transparence du système de freinage. Lorsque les ordres d'extinction sont donnés, le boîtier d'alimentation peut gérer la transparence nécessaire aux calculateurs qu'il alimente, pour enregistrer des données ou maintenir des alimentations de dispositifs de parc, par exemple.

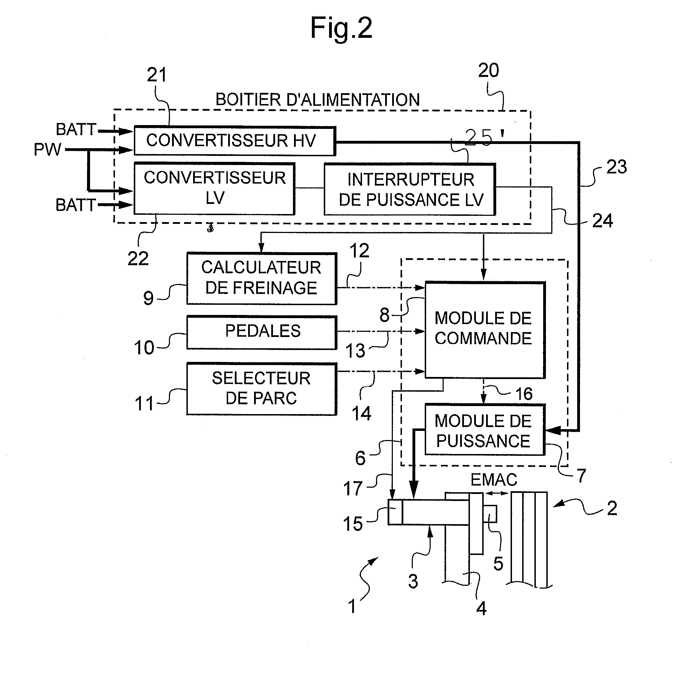

Selon une variante de réalisation illustrée à la figure 2, il est loisible, en remplacement (ou en complément) de l'interrupteur de puissance 25 disposé sur la ligne d'alimentation en haute tension, de prévoir un interrupteur 25' disposé sur la ligne d'alimentation en basse tension. L'interrupteur 25' est commandé de façon à se fermer si un ordre de freinage est généré, en restant ouvert dans les autres cas, afin de prévenir tout risque de freinage intempestif. En effet, plutôt que de priver le module de puissance de haute tension empêchant ainsi les actionneurs d'appliquer un quelconque effort de freinage, le nouvel interrupteur prive le module de commande de basse tension, empêchant ainsi le module de commande d'élaborer les consignes nécessaires au module de puissance pour alimenter les actionneurs. L'effet est donc le même, mais le nouvel interrupteur 25' est bien sûr de taille plus réduite et donc moins lourd et moins encombrant.

Alternativement, l'interrupteur 25' peut être laissé dans l'état passant par défaut, et être ouvert en réponse à un ordre d'extinction des équipements, ou dans des phases de fonctionnement de l'aéronef sans freinage (par exemple en réponse à la détection de l'arrivée des atterrisseurs en position repliée dans leur soute).

L'invention n'est bien sûr pas limitée à ce qui vient d'être décrit, mais englobe plus généralement toute variante entrant dans le cadre défini par les revendications.

En particulier, bien que le module de commande et le module de puissance soient ici représentés comme étant physiquement regroupés en un même contrôleur ou EMAC, ces deux modules pourront être séparés. Ainsi, le module de commande pourra par exemple être intégré au calculateur de freinage, tandis que le module de puissance pourra être disposé au plus près des actionneurs de freinage.

En outre, bien que la présence d'un interrupteur de puissance commandé dans le boîtier d'alimentation permette de prévenir les freinages intempestifs, un tel interrupteur pourra être omis si par ailleurs d'autres sécurités permettent d'éviter de tels événements.

Les moyens de génération de basse tension du boîtier d'alimentation peuvent travailler à partir de différentes sources de puissance :
- un bus de puissance de l'aéronef (haute ou basse tension, alternative ou continue, disponible avec les alternateurs entraînés par les moteurs, l'APU, un groupe de parcs...) ;
- la batterie de l'aéronef, ou une batterie interne du boîtier d'alimentation, cette source étant normalement toujours disponible ;
- la haute tension générée par le boîtier d'alimentation lui-même.

Enfin, le boîtier d'alimentation de l'invention pourra être équipé d'une source de puissance interne, par exemple une batterie dédiée, adaptée à prendre le relais du bus de puissance et des batteries de l'aéronef lorsque ceux-ci sont défaillants ou indisponibles.

## Revendications

1. Architecture de système de freinage pour aéronef comportant :
- des freins à actionneurs électromécaniques (3) pour appliquer sélectivement un effort de freinage sur des piles de disques (2) respectives pour exercer un couple de freinage sur des roues respectives ;
- au moins un module de puissance (7) adapté à envoyer aux actionneurs électromécaniques des courants de phase afin que ceux-ci exercent un effort de freinage ;
- au moins un module de commande (8) pour commander le module de puissance en réponse à un ordre de freinage de sorte que des courants de phase appropriés soient envoyés aux actionneurs pour que ceux-ci développent l'effort de freinage désiré;
- au moins un boîtier d'alimentation (20) comportant des moyens de génération (21) d'une haute tension (HVDC) pour fournir au module de puissance la haute puissance nécessaire à l'alimentation des actionneurs, **caractérisé en ce que** le boîtier d'alimentation comporte en outre des moyens de génération (22) d'une basse tension (LVDC) pour alimenter en basse tension au moins le module de commande ;
et **en ce que** le boîtier d'alimentation (20) est équipé d'un interrupteur (25') commandé disposé en aval des moyens de génération (22) de basse tension (LVDC) et placé dans un état passant en réponse à un ordre de freinage délivré au module de commande (8).

2. Architecture de système de freinage selon la revendication 1, dans lequel les moyens de génération d'une basse tension (22) alimentent également un calculateur de freinage (9) adapté à délivrer au module de commande un ordre de freinage.

3. Architecture de système de freinage selon la revendication 1, dans lequel le boîtier d'alimentation (20) est équipé d'un interrupteur (25) commandé disposé en aval des moyens de génération (21) de haute tension (HVDC) et placé dans un état passant en réponse à un ordre de freinage délivré au module de commande (8).

## Patentansprüche

1. Aufbau eines Bremssystems für ein Luftfahrzeug, umfassend:
- Bremsen mit elektromechartischen Aktoren (3) zum selektiven Ausüben einer Bremskraft auf jeweilige Stapel von Scheiben (2), um ein Bremsmoment auf die jeweiligen Räder auszuüben;
- mindestens ein Leistungsmodul (7), das dazu geeignet ist, Phasenströme zu den elektromechanischen Aktoren zu schicken, damit diese eine Bremskraft ausüben;
- mindestens ein Steuermodul (8), um das Leistungsmodul in Antwort auf einen Bremsbefehl derart zu steuern, dass geeignete Phasenströme zu den Aktoren geschickt werden, damit diese die gewünschte Bremskraft entwickeln;
- mindestens einen Versorgungskasten (20), der Mittel (21) zum Erzeugen einer Hochspannung (HVDC) umfasst, um dem Leistungsmodul die zur Versorgung der Aktoren notwendige hohe Leistung zu liefern, **dadurch gekennzeichnet, dass** der Versorgungskasten ferner Mittel (22) zum Erzeugen einer Niederspannung (LVDC) umfasst, um zumindest das Steuermodul mit Niederspannung zu versorgen;
und dass der Versorgungskasten (20) mit einem gesteuerten Unterbrecher (25') ausgestattet ist, der stromabwärts der Mittel (22) zum Erzeugen von Niederspannung (LVDC) angeordnet ist und in Antwort auf einen zu dem Steuermodul (8) gesendeten Bremsbefehl in einen Durchlasszustand versetzt wird.

2. Aufbau eines Bremssystems nach Anspruch 1, bei dem die Niederspannungserzeugungsmittel (22) ferner einen Bremsrechner (9) versorgen, der dazu geeignet ist, dem Steuermodul einen Bremsbefehl zu liefern.

3. Aufbau eines Bremssystems nach Anspruch 1, bei dem der Versorgungskasten (20) mit einem gesteuerten Unterbrecher (25) ausgestattet ist, der stromabwärts der Mittel (21) zum Erzeugen der Hochspannung (HVDC) angeordnet ist und in Antwort auf einen zu dem Steuermodul (8) gesendeten Bremsbefehl in einen Durchlasszustand versetzt wird.

## Claims

1. Aircraft braking system architecture comprising:
- brakes with electromechanical actuators (3) for selectively applying a braking force to respective stacks of disks (2) in order to exert a braking torque on respective wheels;
- at least one power module (7) designed to send phase currents to the electromechanical actuators so that the latter can exert a braking force;
- at least one control module (8) for controlling the power module in response to a braking command such that appropriate phase currents are sent to the actuators so that these can develop the desired braking force;
- at least one power supply unit (20) comprising means (21) of generating a high voltage (HVDC) to supply the power module with the high power it needs for powering the actuators,
characterizes in that the power supply unit (20) comprises means (22) for generating a low voltage (LVDC) for powering at least the control module at a low voltage, and in that the power supply unit (20) is equipped with a controlled switch (25') positioned downstream of the means (22) of generating low voltage (LVDC) and switched into a closed position in response to a braking command delivered to the control module (8).

2. Braking system architecture according to claim 1, in which the means (22) of generating a low voltage also power a braking computer (9) designed to deliver a braking command to the control module.

3. Braking system architecture according to claim 1, in which the power supply unit (20) is equipped with a controlled switch (25) positioned downstream of the means (21) of generating high voltage (HVDC) and switched into a closed position in response to a braking command delivered to the control module (8).
